# EUROPEAN PATENT SPECIFICATION

(11) **EP 4 351 843 B1**
(45) Date of publication and mention of the grant of the patent: **21.10.2026**
(21) Application number: 22764378.0
(22) Date of filing: 08.08.2022
(51) Int. Cl.: B25J 9/16, G05B 19/418

(54) **METHOD AND ASSEMBLY SYSTEM FOR AUTOMATED MACHINE BASED PRODUCT ASSEMBLING**
VERFAHREN UND MONTAGESYSTEM FÜR AUTOMATISIERTE MASCHINENBASIERTE PRODUKTMONTAGE
PROCÉDÉ ET SYSTÈME D'ASSEMBLAGE POUR L'ASSEMBLAGE AUTOMATISÉ DE PRODUITS BASÉ SUR DES MACHINES

(30) Priority: 10.08.2021 EP 21190554
(43) Date of publication of application: 17.04.2024
(73) Proprietor: Siemens Aktiengesellschaft, 80333 München (DE)
(72) Inventor: DIETRICH, Vincent, 80639 München (DE); SCHMITT, Philipp Sebastian, 80797 München (DE); WURM, Kai, 81739 München (DE); KINDL, Andreas, 92269 Fensterbach (DE)
(74) Representative: Siemens Patent Attorneys
(86) International application number: PCT/EP2022/072247
(87) International publication number: WO 2023/016991

(56) References cited:
- WO-A1-2018/217890
- US-A- 5 586 387
- US-B1- 9 671 777
- MICHNIEWICZ JOACHIM ET AL: "Cyber-Physical-Robotics - Modelling of modular robot cells for automated planning and execution of assembly tasks", MECHATRONICS, vol. 34, 31 December 2016 (2016-12-31), pages 170 - 180, XP029535333, ISSN: 0957-4158, DOI: 10.1016/J.MECHATRONICS.2015.04.012

## Description

The invention refers to a method for automated machine based product assembling according to claim 1 and an assembly system for automated machine based product assembling according to claim 5.

In discrete manufacturing, products are often assembled from parts. For example, parts are inserted into other parts, press-fitted or otherwise joined to one another to create the finished product. Application domains are for example industry manufacturing, automotive manufacturing and electronics manufacturing.

Automating these joining processes can be complex since high accuracies, so for instance less than one millimeter, may be required when inserting parts. Assembly processes are usually automated by constructing special-purpose assembly machines. Often, each step in the assembly process is automated by a special-purpose machine and these machines are arranged in an assembly line where the work piece is transported from one machine to next until the product is completely assembled. This traditional approach of constructing a special-purpose assembly line is only applied if high volumes of products are produced on the assembly line. Only then will the high investment in the assembly line by justified. For this reason, a low-volume or possibly also high-mix assembly is rarely automated.

Furthermore, these machines include fixtures and other devices to minimize inaccuracies. Such machines cannot be easily re-tasked to assemble other products.

Flexible assembly machines exist according to the non-patent literature from "Sawik T. (1999) Flexible Assembly Systems - Hardware Components and Features. In: Production Planning and Scheduling in Flexible Assembly Systems. Springer, Berlin, Heidelberg. https://doi.org/10.1007/978-3-642-58614-9 1".

But these machines are either highly specialized, e.g. according to post-published European Patent Application with the Application No. 20203916.0-1202 for pick & place of components in "Printed Circuit Board <PCB>"- production or they require a high manual effort in programming, e.g. in body in white lines in car production.

Document WO 2018/217890 A1 discloses techniques for flexible, on-site additive manufacturing of components or portions thereof for transport structures.

Document Joachim Michniewicz et al. "Cyber-Physical-Robotics - Modelling of modular robot cells for automated planning and execution of assembly tasks", MECHATRONICS, vol. 34, 31 December 2016 (2016-12-31), pages 170-180, XP029535333, ISSN: 0957-4158, 001: 10.1016/J.MECHATRONICS.2015.04.012, presents an approach, which allows the utilization of the entire flexibility of modular robot cells.

To minimize inaccuracies, traditionally machines include fixtures and other devices to precisely orient parts for assembly. These specialized fixtures and devices add to the complexity of assembly machines and underline their quality as special-purpose machines.

It is an objective of the invention to propose a method and an assembly system for automated machine based product assembling, by which efforts of (**i**) setting up an automated product assembling and (**ii**) repurposing the automated product assembling to assemble different products, in particular products of distinguishing application domains such as automotive and electronics, are reduced.

This objective is solved with regard to a method defined in claim 1.

The objective is further solved with regard to an assembly system defined in claim 5. The invention according to claims 1 and 5 is to assemble a product on a modular basis from product parts to be assembled, wherein the product assembling is split into two separate operations, with
**a**) automated machine fetching from a delivery area (DA) of product parts product parts (PDP_{DA}), automated machine placing the fetched product parts (PDP_{DA}) part-by-part on distribution fixtures (DF) of a modular semantic fixture system, being product part specific and assembly process flexible, at a hand-over area (HOA) for product parts to handover and localizing the distribution fixture (DF) optically in the course of a logistic distribution operation (DOP),
**b**) automated machine fetching from the distribution fixture (DF) a product part (PDP_{DF}) of the product parts (PDP_{DA}), automated machine placing the fetched product part (PDP_{DF}) on assembly fixtures (AF) of the modular semantic fixture system at an assembly workspace (AWS) for product parts to assemble and localizing the fixtures (DF, AF) optically in the course of an assembly operation (AOP),
   wherein the steps a) and b) are performed by the same automated machine (AMA);
**c**) computing (cpt) and executing (exe) by automated machine motion generation including a collision-free automated machine motion or automated machine path planning
   **c1**) primary kinematic machine-motion-sequences (MAMSₖ₁) to enable the automated machine fetching and the automated machine placing in the course of the distribution operation (DOP) and
   **c2)** secondary kinematic machine-motion-sequences (MAMSₖ₂) to enable the automated machine fetching and the automated machine placing in the course of the assembly operation (AOP),
   **d**) providing a hybrid, at least reactive and deliberative automated machine architecture (AMAAT), to enable or ensure, based on
      - a "world model for automated machines" as a digital twin to formulate correct automated machine-behavioral sets being used during automated machine run-time,
      - a three-dimensional model of an assembly environment (AEV) within which and information (INF), preferably geometric information, of the product (PD) and the product parts (PDP, PDP_{DA}, PDP_{DF}) with which the distribution operation (DOP) and the assembly operation (AOP) are executed, and
      - an "automated machine workflow" a piece of automated machine work to carry out the distribution operation (DOP) and the assembly operation (AOP) is passed in series of automated machine stages from initiation to completion, the execution of the primary kinematic machine-motion-sequences (MAMSₖ₁) and the secondary kinematic machine-motion-sequences (MAMSₖ₂) via the automated machine motion generation by
         **d1**) initializing (ilz) the "world model for automated machines" according to a configuration information (CINF) configuring the automated machine (AMA) and the assembly environment (AEV) and
         **d2**) instantiating (itt) the "machine workflow" and updating (upd) the "world model for automated machines" with the information (INF) of the product (PD) and the product parts (PDP, PDP_{DA}, PDP_{DF}) ,
   wherein the steps c) and d) are performed by automated-machine-control-unit connected with the automated machine; wherein the product (PD) being assembled according to the assembly operation (AOP) is placed by the same automated machine in or on a product fixture (PF) of the modular semantic fixture system at the hand-over area (HOA) and the product (PD) placed in or on the product fixture (PF) is handed over to an output area (OPA).

A technical explanation, what "the hybrid, at least reactive and deliberative machine architecture" is about and what it meant by, is given in https://en.wikipedia.org/wiki/Robotic paradigm according to the version from August 29, 2020 and in https://de.wikipedia.org/wiki/Autonomer mobiler Roboter according to the version from October 12, 2020.

The advantage of the idea solving the addressed problem (objective of the invention) and summarized above lies in the reduction of setup costs per assembly. This cost will be mainly driven by the cost of generating a digital model of the product to be assembled, e.g., design. Since such models are already used today, for manual assembly, the cost of setting up an automated assembly unit will be close to zero using the idea.

One key aspect of the idea is an automated machine motion generation with a collision-free motion or path planning of the automated machine within a workspace of the automated machine executing - as two kinematic chains - primary kinematic machine-motion-sequences enabling a logistic distribution operation of the automated machine and secondary kinematic machine-motion-sequences enabling an assembly operation of the automated machine.

The automated machine motion generation approach on the one hand prevents unintended collision of the automated machine, e.g., the robot or the two robots. Furthermore, the automated machine motion generation is robust to expected disturbances and tolerances.

For this reason, the solution - the proposed method and the proposed assembly system - solved the addressed problem enables at least one automated machine connected with or assigned to an automated-machine-control-unit which are forming a technical, functional subsystem of the assembly system and designed such that inter alia an automated machine architecture is provided. The proposed assembly system with the at least one automated machine is modular and flexible by design.

The modular and flexible assembly system with the at least one automated machine, consisting of one or more robots forming a robot system, includes besides the automated-machine-control-unit for instance further a product database that holds assembly instructions and geometric information about the product, motion generation software, a three-dimensional model of the environment, a kinematic description of the at least one automated machine respectively the robot system, a system of modular semantic fixtures and a vision system based on at least one camera.

So, the automated machine can be extended to produce new products or variants by adding or removing fixtures and other devices. The machine it is based on one or more robots. The robots can handle various parts during assembly and automated-machine-control-unit automates the programming of the machine by computing all required motions.

To enable the logistic distribution operation and the automated machine of the automated machine the assembly system consists - for example, but preferably - one robot that retrieves parts for the product assembly, called as a "logistics robot", and a further robot that assembles the product parts to assemble the product, called as "assembly robot".

The automated-machine-control-unit computes motions for both robots based on the three-dimensional model of the environment, the kinematic description of the robot system, the layout of the modular semantic fixtures, and the geometric information of the product and its product parts. To compute motions, the automated-machine-control-unit uses the motion generation software and implements the motions, e.g., by applying a motion planning algorithm.

Flexibility in the assembly process is achieved by relying on the modular system of fixtures at the handover area and assembly workspace. The fixtures contain a machine-readable marker that identifies the fixture and allows it to be precisely located in the workspace. The camera of the vision system is used to locate the fixtures whenever fixtures are added, moved, or removed. The fixtures ensure that product parts are presented and grasped in a known, precisely defined location and orientation. These fixtures can be specific to the product parts being assembled but they can be added and removed as required by the assembly process. For this reason, the assembly workspace remains modular and flexible even though product-specific fixtures are used.

The automated-machine-control-unit computes motions for the logistics robot so that the logistics robot retrieves product parts from a designated delivery area in the assembly environment. The logistics robot retrieves parts to be assembled from the delivery area and places them in fixtures at a handover location that is also reachable by the assembly robot.

The automated-machine-control-unit then computes motions for the assembly robot to grasp the parts from the fixtures in the handover area. The assembly robot grasps the parts and places them at fixtures in an assembly workspace. automated-machine-control-unit computes motions for the assembly robot so that the assembly robot assembles parts to other product parts as instructed in the assembly instructions. After assembly is finished the product is placed in a fixture in the handover area. The logistics robot then takes the product from this fixture and places it at a defined output area.

The delivery, handover, and output areas as well as the location of the fixtures are specified in the three-dimensional model of the assembly environment.

To account for inaccuracies in parts delivery at the delivery area, the logistics robot can use the camera of the vision system to locate the product parts.

An extension of this system is a way of specifying or encoding logistics and assembly instructions in machine-readable identifiers of the fixtures. In this way, the process described above would be encoded using the modular semantic fixtures. For example, the logistics robot would first read the identifier of all fixtures in the handover area. It would then decode the identifiers or do a corresponding database lookup to determine which product parts to put on those fixtures. It could then retrieve the product parts from the delivery area and place these parts on the fixtures. Similarly, the assembly robot could read the identifiers of all fixtures to determine all required assembly steps and delivery locations in the handover area.

For clarification, the assembly system with exactly two robots was explained above, but it is also possible to use within the assembly system with one robot or more than two robots. If only one robot is used, this robot is used to implement the function of the logistics and assembly robots. If more than two robots are used then the function of one or both robots is duplicated, e.g., for performance reasons. Furthermore, it is also possible to use within the assembly system other kinematics instead of robots, such as gantries or delta robots.

With the invention being presented above, a flexible assembly system or cell can be constructed. This system or cell allows to automate low-volume assembly tasks since it can be adapted to new products with moderate effort. All that needs to be changed are the product database, the fixtures, if they are product-specific, and the assembly sequence. If the assembly sequence is encoded in the fixtures, only the fixtures and product database need to be changed. The system hardware and automated-machine-control-unit, the description of the environment, the kinematic description of the system, and the motion generation software can be reused.

The flexible modular assembly system or cell will allow for a smaller footprint and a smaller capital investment compared to a traditional production line. While it is unlikely that it will have the same performance as an optimized special-purpose line, several modular assembly systems or cells can be used in parallel to scale performance as required. And while the components of special-purpose production lines rarely are reused in future production lines, the modular assembly system or cell can be re-tasked to many future applications, leading to a reduction in waste.

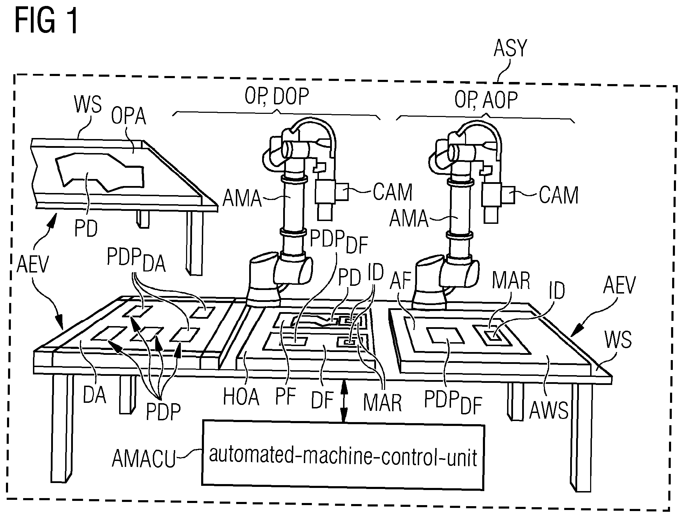

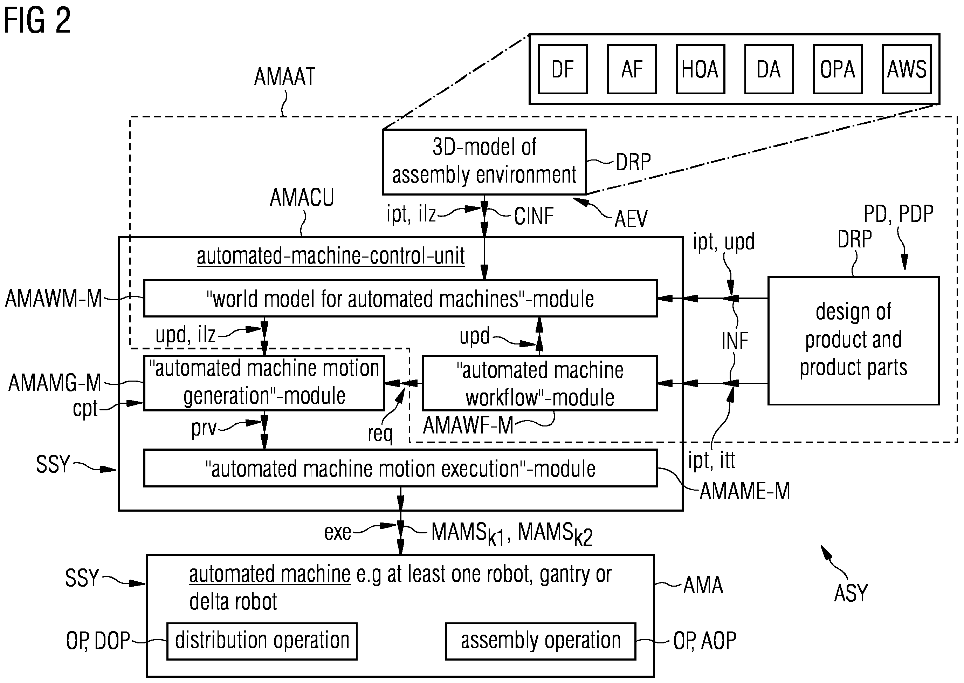

Moreover, advantageous further developments of the invention arise out of the following description of a preferred embodiment of the invention according to FIGURES 1 and 2. They show:
- FIGURE 1: as a demonstration setup - an assembly system for automated machine based product assembling within a workspace,
- FIGURE 2: structure and design of the assembly system according to the FIGURE 1.

FIGURE 1 shows - as a demonstration setup - an assembly system ASY for automated machine based product assembling within a workspace WS as part of an assembly environment AEV to assemble a product PD on a modular basis from product parts PDP to be assembled, wherein the product assembling is split into two separate operations OP. For doing so the assembly system ASY includes two automated machines AMA and an automated-machine-control-unit AMACU connected with the two automated machines AMA executing the two operations OP.

As a modification of the assembly system ASY depicted in the FIGURE 1 it is also possible that only one automated machine AMA or more than two automated machines AMA are included in the assembly system ASY, wherein the two operations are executed either both through the one automated machine AMA or they are spread over the more than two automated machines AMA.

The two operations OP are a logistic distribution operation DOP and an assembly operation AOP and the automated machine AMA is preferably a robot, a gantry or a delta robot executing the distribution operation DOP and the assembly operation AOP.

In the course of the logistic distribution operation DOP one of the two automated machines AMA - in the FIGURE 1 the left one - (i) fetches in a first step from a delivery area DA of the workspace WS, where the product parts PDP are located, product parts PDP_{DA} part-by-part for the distribution to assemble the product PD in an automated manner and (ii) places in a second step the fetched product parts PDP_{DA} part-by-part each on a distribution fixture DF of a modular semantic fixture system at a hand-over area HOA of the workspace WS for product parts to handover. This modular semantic fixture system with the distribution fixtures DF is product part specific and assembly process flexible.

In order to carry the automated machine fetching and the automated machine placing the said automated machine AMA includes a camera CAM for localizing the distribution fixture DF in the hand-over area HOA optically. To localize the distribution fixtures DF, they are marked by automated machine-readable markers MAR, which precisely locate the distribution fixtures DF at the hand-over area HOA. In addition, according to a preferred embodiment the automated machine-readable markers MAR include identifiers ID identifying the distribution fixtures DF to facilitate the fetching and placing process.

In the course of the assembly operation AOP the other of the two automated machines AMA - in the FIGURE 1 the right one - (i) fetches in a first step from the distribution fixture DF a product part PDP_{DF} of the product parts PDP_{DF} and (ii) places each in a second step the fetched product part PDP_{DF} on an assembly fixture AF of the modular semantic fixture system at an assembly workspace AWS of the workspace WS for product parts to assemble. The modular semantic fixture system with the fixtures DF, AF is also product part specific and assembly process flexible.

In order to carry the automated machine fetching and the automated machine placing the said automated machine AMA also includes a camera CAM for localizing the distribution fixtures DF at the hand-over area HOA and the assembly fixtures AF of the modular semantic fixture system at the assembly workspace AWS optically. To also localize the assembly fixtures AF, they are marked also by automated machine-readable markers MAR, which precisely locate the assembly fixtures AF at the assembly workspace AWS. Again, in addition according to a preferred embodiment the automated machine-readable markers MAR include identifiers ID identifying the assembly fixtures AF to facilitate the fetching and placing process.

As soon as the product PD is assembled according to the assembly operation AOP it is placed by the other automated machine AMA - in the FIGURE 1 the right one - in or on a product fixture PF of the modular semantic fixture system at the hand-over area HOA and afterwards the product PD being placed in or on the product fixture PF is handed over to an output area OPA of the workspace WS by the one automated machine AMA - in the FIGURE 1 the left one.

FIGURE 2 shows structure and design of the assembly system ASY including - according to the FIGURE 1 - the at least one automated machine AMA and the automated-machine-control-unit AMACU, which form a technical, functional subsystem SSY.

Regardless from the cited design of the automated machine AMA it is essential for the assembly purpose that the automated machine AMA is able to carry out the two operations OP, so (**i**) the logistic distribution operation DOP and (**ii**) the assembly operation AOP.

This means that in the case of a single robot both operations, the logistic distribution operation DOP and the assembly operation AOP, the single robot must be able to carry out both operations, whereas in the case of two robots or two gantries or two delta robots as depicted in the FIGURE 2 one robot carries out the logistic distribution operation DOP and the other the assembly operation AOP.

The automated machine AMA and the automated-machine-control-unit AMACU of the assembly system ASY, which work together technically and functionally, form a hybrid, at least reactive and deliberative automated machine architecture AMAAT. Such a machine architecture is described for example https://en.wikipedia.org/wiki/Robotic paradigm according to the version from August 29, 2020 and in https://de.wikipe-dia.org/wiki/Autonomer mobiler Roboter according to the version from October 12, 2020.

According to this automated machine architecture AMAAT (**i**) a "world model for automated machines"-module AMAWM-M, being part of the automated-machine-control-unit AMACU, implements a "world model for automated machines " as a digital twin to formulate correct behavioral sets of the automated machine AMA, so-called automated machine-behavioral sets, being used during a run-time of the automated machine AMA, (**ii**) a three-dimensional model of the assembly environment AEV - being stored in a data repository DRP and including inter alia model data of the distribution fixtures DF, the assembly fixtures AF, the hand-over area HOA, the distribution area DA, the output area OPA and the assembly workspace AWS within which and information INF, preferably geometric information, of the product PD and the product parts PDP, PDP_{DA}, PDP_{DF} with which the distribution operation DOP and the assembly operation AOP are executed, and (**iii**) a "automated machine workflow"-module AMAWF-M, being also part of the automated-machine-control-unit AMACU, implements a workflow of the automated machine AMA, a so-called "automated machine workflow", by which a piece of automated machine work to carry out the distribution operation DOP and the assembly operation AOP is passed in series of automated machine stages from initiation to completion.

The automated-machine-control-unit AMACU includes further an "automated machine motion generation"-module AMAMG-M and an "automated machine motion execution"-module AMAME-M. The "automated machine motion generation"-module AMAMG-M thereby provides prv a collision-free motion or path planning of the automated machine AMA within the workspace WS of the assembly environment AEV, where according to the FIGURE 1 the product PD is assembled on the modular basis from the product parts PDP to be assembled, to the "automated machine motion execution"-module AMAME-M. Based on this provision the "automated machine motion execution"-module AMAME-M executes exe on the automated machine AMA primary kinematic machine-motion-sequences MAMSₖ₁ to enable the automated machine fetching and the automated machine placing of the at least one automated machine AMA in the course of the distribution operation DOP and secondary kinematic machine-motion-sequences MAMSₖ₂ to enable the automated machine fetching and the automated machine placing of the at least one automated machine AMA in the course of the assembly operation AOP.

Within automated-machine-control-unit AMACU of the assembly system ASY the "world model for automated machines"-module AMAWM-M, the "automated machine workflow"-module AMAWF-M, the "automated machine motion generation"-module AMAMG-M and the "automated machine motion execution"-module AMAME-M form a technical, functional subsystem SSY. Forming this technical, functional subsystem SSY the "world model for automated machines"-module AMAWM-M is updated upd by the "automated machine workflow"-module AMAWF-M and the "automated machine motion generation"-module AMAMG-M is updated upd and initialized ilz on one hand by the "world model for automated machines"-module AMAWM-M and is requested req on the other by the "automated machine workflow"-module AMAWF-M.

Furthermore, the technical, functional subsystem SSY enables or ensures the execution of the primary kinematic machine-motion-sequences MAMSₖ₁ and the secondary kinematic machine-motion-sequences MAMSₖ₂ via the "automated machine motion generation"-module AMAMG-M and the "automated machine motion generation"-module AMAMG-M in such a way that
(**a**) a configuration information CINF configuring the automated machine AMA and the assembly environment AEV is inputted ipt into in the "world model for automated machines"-module AMAWM-M and thereby initializing ilz the "world model for automated machines" and
(**b**) a design of the product PD and the product parts PDP, PDP_{DA}, PDP_{DF} in form of the information INF, being stored also in the data repository DRP, is inputted ipt
(**b1**) into the "automated machine workflow"-module AMAWF-M thereby instantiating itt the "automated machine workflow" and
(**b2**) into in the "world model for automated machines"-module AMAWM-M thereby updating upd the "world model for automated machines".

The configuration information CINF configuring the automated machine AMA and assembly environment AEV with the workspace WS as well as the design of the product PD and the product parts PDP, PDP_{DA}, PDP_{DF} in form of the information INF can be taken from the data repository DRP or databases in general by PUSH- or PULL-based data transfer, but also a file-transfer or a transfer via an electronic interface is possible.

## Claims

1. Method for automated machine-based product assembling, by which to assemble a product (PD) on a modular basis from product parts (PDP) to be assembled the product assembling is split into two separate operations (OP), with
**a**) automated machine fetching from a delivery area (DA) of product parts product parts (PDP_{DA}), automated machine placing the fetched product parts (PDP_{DA}) part-by-part on distribution fixtures (DF) of a modular semantic fixture system, being product part specific and assembly process flexible, at a hand-over area (HOA) for product parts to handover and localizing the distribution fixture (DF) optically in the course of a logistic distribution operation (DOP),
**b**) automated machine fetching from the distribution fixture (DF) a product part (PDP_{DF}) of the product parts (PDP_{DA}), automated machine placing the fetched product part (PDP_{DF}) on assembly fixtures (AF) of the modular semantic fixture system at an assembly workspace (AWS) for product parts to assemble and localizing the fixtures (DF, AF) optically in the course of an assembly operation (AOP),
wherein the steps a) and b) are performed by the same automated machine (AMA);
**c**) computing (cpt) and executing (exe) by automated machine motion generation including a collision-free automated machine motion or automated machine path planning
**c1**) primary kinematic machine-motion-sequences (MAMSₖ₁) to enable the automated machine fetching and the automated machine placing in the course of the distribution operation (DOP) and
**c2**) secondary kinematic machine-motion-sequences (MAMSₖ₂) to enable the automated machine fetching and the automated machine placing in the course of the assembly operation (AOP),
**d**) providing a hybrid, at least reactive and deliberative automated machine architecture (AMAAT), to enable or ensure, based on
- a "world model for automated machines" as a digital twin to formulate correct automated machine-behavioral sets being used during automated machine run-time,
- a three-dimensional model of an assembly environment (AEV) within which and information (INF), preferably geometric information, of the product (PD) and the product parts (PDP, PDP_{DA}, PDP_{DF}) with which the distribution operation (DOP) and the assembly operation (AOP) are executed, and
- an "automated machine workflow" a piece of automated machine work to carry out the distribution operation (DOP) and the assembly operation (AOP) is passed in series of automated machine stages from initiation to completion,
the execution of the primary kinematic machine-motion-sequences (MAMSₖ₁) and the secondary kinematic machine-motion-sequences (MAMSₖ₂) via the automated machine motion generation by
**d1**) initializing (ilz) the "world model for automated machines" according to a configuration information (CINF) configuring the automated machine (AMA) and the assembly environment (AEV) and
**d2**) instantiating (itt) the "machine workflow" and updating (upd) the "world model for automated machines" with the information (INF) of the product (PD) and the product parts (PDP, PDP_{DA}, PDP_{DF}),
wherein the steps c) and d) are performed by automated-machine-control-unit connected with the automated machine; wherein the product (PD) being assembled according to the assembly operation (AOP) is placed by the same automated machine in or on a product fixture (PF) of the modular semantic fixture system at the hand-over area (HOA) and the product (PD) placed in or on the product fixture (PF) is handed over to an output area (OPA.

2. Method according to claim 1, **characterized in that** the distribution fixtures (DF) and the assembly fixtures (AF) are marked by automated machine-readable markers precisely locating the fixtures (DF, AF) in the hand-over area (HOA) respectively the assembly workspace (AWS), which preferably include identifiers (ID) identifying the fixtures (DF, AF).

3. Method according to claim 2, **characterized in that** the identifiers (ID) include information specifying or encoding distribution and assembly logistics and assembly instructions.

4. Method according to one of the claims 1 to 3, **characterized in that**
the automated machine (AMA) includes at least one robot, gantry or delta robot executing the distribution operation (DOP) and the assembly operation (AOP).

5. Assembly system (ASY) for automated machine-based product assembling, by which to assemble a product (PD) on a modular basis from product parts (PDP) to be assembled the product assembling is split into two separate operations (OP), with
**a**) at least one automated machine (AMA)
**a1**) automated machine fetching from a delivery area (DA) of product parts product parts (PDP_{DA}), automated machine placing the fetched product parts (PDP_{DA}) part-by-part on distribution fixtures (DF) of a modular semantic fixture system, being product part specific and assembly process flexible, at a hand-over area (HOA) for product parts to handover and localizing the distribution fixture (DF) optically in the course of a logistic distribution operation (DOP),
**a2**) automated machine fetching from the distribution fixture (DF) a product part (PDP_{DF}) of the product parts (PDP_{DA}), automated machine placing the fetched product part (PDP_{DF}) on assembly fixtures (AF) of the modular semantic fixture system at an assembly workspace (AWS) for product parts to assemble and localizing the fixtures (DF, AF) optically in the course of an assembly operation (AOP),
wherein the step a) is performed by the same automated machine (AMA);
**b)** an automated-machine-control-unit (AMACU) connected with the at least one automated machine (AMA) thereby forming a technical, functional subsystem (SSY) and designed such that
**b1**) an "automated machine motion generation"-module (AMAMG-M) computes (cpt) by generating a collision-free automated machine motion or automated machine path planning
**b11**) primary kinematic machine-motion-sequences (MAMSₖ₁) to enable the automated machine fetching and the automated machine placing of the at least one automated machine (AMA) in the course of the distribution operation (DOP) and
**b12**) secondary kinematic machine-motion-sequences (MAMSₖ₂) to enable the automated machine fetching and the automated machine placing of the at least one automated machine (AMA) in the course of the assembly operation (AOP), which are provided (prv) to an "automated machine motion execution"-module (AMAME-M) executing (exe) the computed sequences (MAMSₖ₁, MAMSₖ₂) on the at least one automated machine (AMA),
**b2**) a hybrid, at least reactive and deliberative automated machine architecture (AMAAT) is provided to enable or ensure, based on
- a "world model for automated machines"-module (AMAWM-M) as a digital twin to formulate correct automated machine-behavioral sets being used during automated machine run-time,
- a three-dimensional model of an assembly environment (AEV) within which and information (INF), preferably geometric information, of the product (PD) and the product parts (PDP, PDP_{DA}, PDP_{DF}) with which the distribution operation (DOP) and the assembly operation (AOP) are executed, and
- an "automated machine workflow"-module (AMAWF-M) a piece of automated machine work to carry out the distribution operation (DOP) and the assembly operation (AOP) is passed in series of automated machine stages from initiation to completion,
the execution of the primary kinematic machine-motion-sequences (MAMSₖ₁) and the secondary kinematic machine-motion-sequences (MAMSₖ₂) via the "automated machine motion generation"-module (AMAMG-M) and the "automated machine motion generation"-module (AMAMG-M) by
**b21)** initializing (ilz) the "world model for automated machines" according to a configuration information (CINF) configuring the automated machine (AMA) and the assembly environment (AEV) and
**b22**) instantiating (itt) the "machine workflow" and updating (upd) the "world model for automated machines" with the information (INF) of the product (PD) and the product parts (PDP, PDP_{DA}, PDP_{DF}),
wherein the step b) is performed by the automated-machine-control-unit connected with the automated machine;
wherein the product (PD) being assembled according to the assembly operation (AOP) is placed by the same automated machine in or on a product fixture (PF) of the modular semantic fixture system at the hand-over area (HOA) and the product (PD) placed in or on the product fixture (PF) is handed over to an output area (OPA).

6. Assembly system (ASY) according to claim 5, **characterized in that**
the distribution fixtures (DF) and the assembly fixtures (AF) are marked by automated machine-readable markers (MAR) precisely locating the fixtures (DF, AF) in the hand-over area (HOA) respectively the assembly workspace (AWS), which preferably include identifiers (ID) identifying the fixtures (DF, AF).

7. Assembly system (ASY) according to claim 6, **characterized in that**
the at least one automated machine (AMA) includes a camera (CAM) to read the markers (MAR).

8. Assembly system (ASY) according to claim 6, **characterized in that**
the identifiers (ID) include information specifying or encoding distribution and assembly logistics and assembly instructions.

9. Assembly system (ASY) according to one of the claims 5 to 8, **characterized in that**
the automated machine (AMA) is a robot, a gantry or a delta robot executing the distribution operation (DOP) and the assembly operation (AOP).

## Patentansprüche

1. Verfahren für automatisierte maschinenbasierte Produktmontage, bei dem, um ein Produkt (PD) modular aus zu montierenden Produktteilen (PDP) zu montieren, die Produktmontage in zwei separate Vorgänge (OP) aufgeteilt wird, mit
**a**) maschinenautomatisiertem Abholen von Produktteilen (PDP_{DA}) aus einem Lieferbereich (DA) von Produktteilen, maschinenautomatisiertem Platzieren der abgeholten Produktteile (PDP_{DA}) Teil für Teil auf Verteilungshalterungen (DF) eines modularen semantischen Halterungssystems, das produktteilspezifisch und montageprozessflexibel ist, in einem Übergabebereich (HOA) für zu übergebende Produktteile und optischem Lokalisieren der Verteilungshalterung (DF) im Verlauf eines logistischen Verteilungsvorgangs (DOP),
**b**) maschinenautomatisiertem Abholen eines Produktteils (PDP_{DF}) der Produktteile (PDP_{DA}) von der Verteilungshalterung (DF), maschinenautomatisiertem Platzieren des abgeholten Produktteils (PDP_{DF}) auf Montagehalterungen (AF) des modularen semantischen Halterungssystems an einem Montagearbeitsplatz (AWS) für zu montierende Produktteile und optischem Lokalisieren der Halterungen (DF, AF) im Verlauf eines Montagevorgangs (AOP), wobei die Schritte a) und b) von derselben automatisierten Maschine (AMA) durchgeführt werden;
**c**) Berechnen (cpt) und Ausführen (exe) durch Generierung von Bewegungen einer automatisierten Maschine, die eine kollisionsfreie Bewegung der automatisierten Maschine oder eine Bahnplanung der automatisierten Maschine beinhaltet, von
**c1**) primären kinematischen Maschinenbewegungssequenzen (MAMSₖ₁), um das maschinenautomatisierte Abholen und das maschinenautomatisierte Platzieren im Verlauf des Verteilungsvorgangs (DOP) zu ermöglichen, und
**c2**) sekundären kinematischen Maschinenbewegungssequenzen (MAMSₖ₂), um das maschinenautomatisierte Abholen und das maschinenautomatisierte Platzieren im Verlauf des Montagevorgangs (AOP) zu ermöglichen,
**d**) Bereitstellen einer hybriden, zumindest reaktiven und deliberativen Architektur einer automatisierten Maschine (AMAAT), um, basierend auf
- einem "Weltmodell für automatisierte Maschinen" als einem digitalen Zwilling, um korrekte Verhaltenssätze von automatisierten Maschinen zu formulieren, die während der Laufzeit der automatisierten Maschine verwendet werden,
- einem dreidimensionalen Modell einer Montageumgebung (AEV), innerhalb derer, und Informationen (INF), vorzugsweise geometrischen Informationen, des Produkts (PD) und der Produktteile (PDP, PDP_{DA}, PDP_{DF}), mit denen der Verteilungsvorgang (DOP) und der Montagevorgang (AOP) ausgeführt werden, und
- einem "Arbeitsablauf der automatisierten Maschine", wobei ein Teil einer maschinenautomatisierten Arbeit zum Ausführen des Verteilungsvorgangs (DOP) und des Montagevorgangs (AOP) in einer Reihe von Stufen der automatisierten Maschine von der Initiierung bis zum Abschluss weitergegeben wird,
die Ausführung der primären kinematischen Maschinenbewegungssequenzen (MAMSₖ₁) und der sekundären kinematischen Maschinenbewegungssequenzen (MAMSₖ₂) über die Generierung der Bewegung der automatisierten Maschine zu ermöglichen oder sicherzustellen, durch
**d1**) Initialisieren (ilz) des "Weltmodells für automatisierte Maschinen" gemäß einer Konfigurationsinformation (CINF), die die automatisierte Maschine (AMA) und die Montageumgebung (AEV) konfiguriert, und
**d2**) Instanziieren (itt) des "Maschinenarbeitsablaufs" und Aktualisieren (upd) des "Weltmodells für automatisierte Maschinen" mit den Informationen (INF) des Produkts (PD) und der Produktteile (PDP, PDP_{DA}, PDP_{DF}),
wobei die Schritte c) und d) durch eine Einheit zur Steuerung der automatisierten Maschine, die mit der automatisierten Maschine verbunden ist, durchgeführt werden; wobei das Produkt (PD), das gemäß dem Montagevorgang (AOP) montiert wird, durch dieselbe automatisierte Maschine in oder auf einer Produkthalterung (PF) des modularen semantischen Halterungssystems an dem Übergabebereich (HOA) platziert wird und das Produkt (PD), das in oder auf der Produkthalterung (PF) platziert ist, an einen Ausgabebereich (OPA) übergeben wird.

2. Verfahren nach Anspruch 1, **dadurch gekennzeichnet, dass** die Verteilungshalterungen (DF) und die Montagehalterungen (AF) durch Markierungen, die für automatisierte Maschinen lesbar sind, markiert sind, die die Halterungen (DF, AF) in dem Übergabebereich (HOA) beziehungsweise dem Montagearbeitsplatz (AWS) präzise lokalisieren, die vorzugsweise Identifikatoren (ID) beinhalten, die die Halterungen (DF, AF) identifizieren.

3. Verfahren nach Anspruch 2, **dadurch gekennzeichnet, dass** die Identifikatoren (ID) Informationen beinhalten, die Verteilungsund Montagelogistik und Montageanweisungen definieren oder codieren.

4. Verfahren nach einem der Ansprüche 1 bis 3, **dadurch gekennzeichnet, dass**
die automatisierte Maschine (AMA) mindestens einen Roboter, ein Portal oder einen Deltaroboter beinhaltet, der den Verteilungsvorgang (DOP) und den Montagevorgang (AOP) ausführt.

5. Montagesystem (ASY) für automatisierte maschinenbasierte Produktmontage, bei dem, um ein Produkt (PD) modular aus zu montierenden Produktteilen (PDP) zu montieren, die Produktmontage in zwei separate Vorgänge (OP) aufgeteilt wird, mit
**a**) mindestens einer automatisierten Maschine (AMA)
**a1**) die maschinenautomatisiert Produktteile (PDP_{DA}) aus einem Lieferbereich (DA) von Produktteilen abholt, maschinenautomatisiert die abgeholten Produktteile (PDP_{DA}) Teil für Teil auf Verteilungshalterungen (DF) eines modularen semantischen Halterungssystems, das produktteilspezifisch und montageprozessflexibel ist, in einem Übergabebereich (HOA) für zu übergebende Produktteile platziert und optisch die Verteilungshalterung (DF) im Verlauf eines logistischen Verteilungsvorgangs (DOP) lokalisiert,
**a2**) die maschinenautomatisiert ein Produktteil (PDP_{DF}) der Produktteile (PDP_{DA}) von der Verteilungshalterung (DF) abholt, maschinenautomatisiert das abgeholte Produktteil (PDP_{DF}) auf Montagehalterungen (AF) des modularen semantischen Halterungssystems an einem Montagearbeitsplatz (AWS) für zu montierende Produktteile platziert und optisch die Halterungen (DF, AF) im Verlauf eines Montagevorgangs (AOP) lokalisiert, wobei der Schritt a) von derselben automatisierten Maschine (AMA) durchgeführt wird;
**b**) einer Einheit zur Steuerung der automatisierten Maschine (AMACU), die mit der mindestens einen automatisierten Maschine (AMA) verbunden ist, wodurch ein technisches, funktionales Subsystem (SSY) gebildet wird, und die so ausgelegt ist, dass
**b1**) ein "Generierung von Bewegungen einer automatisierten Maschine"-Modul (AMAMG-M), durch Generieren einer kollisionsfreien Bewegung der automatisierten Maschine oder Bahnplanung der automatisierten Maschine, Folgendes berechnet (cpt):
**b11**) primäre kinematische Maschinenbewegungssequenzen (MAMSₖ₁), um das maschinenautomatisierte Abholen und das maschinenautomatisierte Platzieren der mindestens einen automatisierten Maschine (AMA) im Verlauf des Verteilungsvorgangs (DOP) zu ermöglichen, und
**b12**) sekundäre kinematische Maschinenbewegungssequenzen (MAMSₖ₂), um das maschinenautomatisierte Abholen und das maschinenautomatisierte Platzieren der mindestens einen automatisierten Maschine (AMA) im Verlauf des Montagevorgangs (AOP) zu ermöglichen, die einem "Ausführung von Bewegungen einer automatisierten Maschine"-Modul (AMAME-M) bereitgestellt (prv) werden, das die berechneten Sequenzen (MAMSₖ₁, MAMSₖ₂) auf der mindestens einen automatisierten Maschine (AMA) ausführt (exe),
**b2**) eine hybride, zumindest reaktive und deliberative Architektur einer automatisierten Maschine (AMAAT) bereitgestellt wird, um, basierend auf
- einem "Weltmodell für automatisierte Maschinen"-Modul (AMAWM-M) als einem digitalen Zwilling, um korrekte Verhaltenssätze von automatisierten Maschinen zu formulieren, die während der Laufzeit der automatisierten Maschine verwendet werden,
- einem dreidimensionalen Modell einer Montageumgebung (AEV), innerhalb derer, und Informationen (INF), vorzugsweise geometrischen Informationen, des Produkts (PD) und der Produktteile (PDP, PDP_{DA}, PDP_{DF}), mit denen der Verteilungsvorgang (DOP) und der Montagevorgang (AOP) ausgeführt werden, und
- einem "Arbeitsablauf der automatisierten Maschine"-Modul (AMAWF-M), wobei ein Teil einer maschinenautomatisierten Arbeit zum Ausführen des Verteilungsvorgangs (DOP) und des Montagevorgangs (AOP) in einer Reihe von Stufen der automatisierten Maschine von der Initiierung bis zum Abschluss weitergegeben wird,
die Ausführung der primären kinematischen Maschinenbewegungssequenzen (MAMSₖ₁) und der sekundären kinematischen Maschinenbewegungssequenzen (MAMSₖ₂) über das "Generierung von Bewegungen einer automatisierten Maschine"-Modul (AMAMG-M) und das "Generierung von Bewegungen einer automatisierten Maschine"-Modul (AMAMG-M) zu ermöglichen oder sicherzustellen, durch
**b21**) Initialisieren (ilz) des "Weltmodells für automatisierte Maschinen" gemäß einer Konfigurationsinformation (CINF), die die automatisierte Maschine (AMA) und die Montageumgebung (AEV) konfiguriert, und
**b22**) Instanziieren (itt) des "Maschinenarbeitsablaufs" und Aktualisieren (upd) des "Weltmodells für automatisierte Maschinen" mit den Informationen (INF) des Produkts (PD) und der Produktteile (PDP_{,} PDP_{DA}, PDP_{DF}),
wobei der Schritt b) von der Einheit zur Steuerung der automatisierten Maschine durchgeführt wird, die mit der automatisierten Maschine verbunden ist;
wobei das Produkt (PD), das gemäß dem Montagevorgang (AOP) montiert wird, durch dieselbe automatisierte Maschine in oder auf einer Produkthalterung (PF) des modularen semantischen Halterungssystems an dem Übergabebereich (HOA) platziert wird und das Produkt (PD), das in oder auf der Produkthalterung (PF) platziert ist, an einen Ausgabebereich (OPA) übergeben wird.

6. Montagesystem (ASY) nach Anspruch 5, **dadurch gekennzeichnet, dass**
die Verteilungshalterungen (DF) und die Montagehalterungen (AF) durch Markierungen (MAR), die für automatisierte Maschinen lesbar sind, markiert sind, die die Halterungen (DF, AF) in dem Übergabebereich (HOA) beziehungsweise dem Montagearbeitsplatz (AWS) präzise lokalisieren, die vorzugsweise Identifikatoren (ID) beinhalten, die die Halterungen (DF, AF) identifizieren.

7. Montagesystem (ASY) nach Anspruch 6, **dadurch gekennzeichnet, dass**
die mindestens eine automatisierte Maschine (AMA) eine Kamera (CAM) beinhaltet, um die Markierungen (MAR) zu lesen.

8. Montagesystem (ASY) nach Anspruch 6, **dadurch gekennzeichnet, dass**
die Identifikatoren (ID) Informationen beinhalten, die Verteilungs- und Montagelogistik und Montageanweisungen definieren oder codieren.

9. Montagesystem (ASY) nach einem der Ansprüche 5 bis 8, **dadurch gekennzeichnet, dass**
die automatisierte Maschine (AMA) ein Roboter, ein Portal oder ein Deltaroboter ist, der den Verteilungsvorgang (DOP) und den Montagevorgang (AOP) ausführt.

## Revendications

1. Procédé destiné à l'assemblage automatisé de produits basé sur des machines, par lequel pour assembler un produit (PD) sur une base modulaire à partir de pièces de produit (PDP) à assembler, l'assemblage de produits est divisé en deux opérations séparées (OP), avec
a) une récupération de machine automatisée à partir d'une zone de livraison (DA) de pièces de produit (PDP_{DA}), un placement de machine automatisé des pièces de produit (PDP_{DA}) récupérées pièce par pièce sur des gabarits de distribution (DF) d'un système de gabarit sémantique modulaire, qui est spécifique aux pièces de produit et flexible au processus d'assemblage, au niveau d'une zone de transfert (HOA) pour des pièces de produit à transférer et la localisation du gabarit de distribution (DF) de manière optique au cours d'une opération de distribution logistique (DOP),
b) une récupération de machine automatisée à partir du gabarit de distribution (DF) d'une pièce de produit (PDP_{DF}) des pièces de produit (PDP_{DA}), une machine automatisée plaçant la pièce de produit (PDP_{DF}) récupérée sur des gabarits d'assemblage (AF) du système de gabarit sémantique modulaire au niveau d'un espace de travail d'assemblage (AWS) pour des pièces de produit à assembler et la localisation des gabarits (DF, AF) de manière optique au cours d'une opération d'assemblage (AOP),
dans lequel les étapes a) et b) sont réalisées par la même machine automatisée (AMA) ;
c) le calcul (cpt) et l'exécution (exe) par une génération de mouvement de machine automatisée incluant un mouvement de machine automatisée exempt de collisions ou une planification de trajet de machine automatisée
c1) des séquences de mouvement de machine cinématiques primaires (MAMSₖ₁) pour permettre la récupération de machine automatisée et le placement de machine automatisé au cours de l'opération de distribution (DOP) et
c2) des séquences de mouvement de machine cinématiques secondaires (MAMSₖ₂) pour permettre la récupération de machine automatisée et le placement de machine automatisé au cours de l'opération d'assemblage (AOP),
d) la fourniture d'une architecture de machine automatisée hybride au moins réactive et délibérative (AMAAT), pour permettre ou garantir, sur la base
- d'un « modèle d'environnement de machines automatisées » en tant que jumeau numérique pour formuler des ensembles comportementaux de machine automatisée corrects qui sont utilisés pendant un temps de fonctionnement de machine automatisée,
- d'un modèle tridimensionnel d'un environnement d'assemblage (AEV) au sein duquel et une information (INF), de préférence une information géométrique, du produit (PD) et des pièces de produit (PDP, PDP_{DA}, PDP_{DF}) avec lesquelles l'opération de distribution (DOP) et l'opération d'assemblage (AOP) sont exécutées, et
- un « flux de travail de machine automatisée » d'une pièce de travail de machine automatisée pour réaliser l'opération de distribution (DOP) et l'opération d'assemblage (AOP) est passé dans une série de stades de machine automatisée du début à la fin,
l'exécution des séquences de mouvement de machine cinématiques primaires (MAMSₖ₁) et des séquences de mouvement de machine cinématiques secondaires (MAMSₖ₂) via la génération de mouvement de machine automatisée en
d1) initialisant (ilz) le « modèle d'environnement de machines automatisées » selon une information de configuration (CINF) configurant la machine automatisée (AMA) et l'environnement d'assemblage (AEV) et
d2) l'instanciation (itt) du « flux de travail de machine » et la mise à jour (upd) du « modèle d'environnement de machines automatisées » avec l'information (INF) du produit (PD) et des pièces de produit (PDP, PDP_{DA}, PDP_{DF}),
dans lequel les étapes c) et d) sont réalisées par unité de commande de machine automatisée connectée à la machine automatisée ;
dans lequel le produit (PD) qui est assemblé selon l'opération d'assemblage (AOP) est placé par la même machine automatisée dans ou sur un gabarit de produit (PF) du système de gabarit sémantique modulaire au niveau de la zone de transfert (HOA) et le produit (PD) placé dans ou sur le gabarit de produit (PF) est transféré vers une zone de sortie (OPA).

2. Procédé selon la revendication 1, **caractérisé en ce que** les gabarits de distribution (DF) et les gabarits d'assemblage (AF) sont marqués par des marqueurs lisibles par machine automatisée localisant précisément les gabarits (DF, AF) dans la zone de transfert (HOA) respectivement l'espace de travail d'assemblage (AWS), qui incluent de préférence des identifiants (ID) identifiant les gabarits (DF, AF).

3. Procédé selon la revendication 2, **caractérisé en ce que** les identifiants (ID) incluent une information spécifiant ou codant une logistique de distribution et d'assemblage ainsi que des instructions d'assemblage.

4. Procédé selon l'une des revendications 1 à 3, **caractérisé en ce que** la machine automatisée (AMA) inclut au moins un robot, un portique ou un robot delta exécutant l'opération de distribution (DOP) et l'opération d'assemblage (AOP).

5. Système d'assemblage (ASY) destiné à un assemblage automatisé de produits basé sur des machines, par lequel pour assembler un produit (PD) sur une base modulaire à partir de pièces de produit (PDP) à assembler, l'assemblage de produits est divisé en deux opérations séparées (OP), avec
a) au moins une machine automatisée (AMA)
a1) une récupération de machine automatisée à partir d'une zone de livraison (DA) de pièces de produit (PDP_{DA}), un placement de machine automatisé des pièces de produit (PDP_{DA}) récupérées pièce par pièce sur des gabarits de distribution (DF) d'un système de gabarit sémantique modulaire, qui est spécifique aux pièces de produit et flexible au processus d'assemblage, au niveau d'une zone de transfert (HOA) pour des pièces de produit à transférer et la localisation du gabarit de distribution (DF) de manière optique au cours d'une opération de distribution logistique (DOP),
a2) une récupération de machine automatisée à partir du gabarit de distribution (DF) d'une pièce de produit (PDP_{DF}) des pièces de produit (PDP_{DA}), un placement de machine automatisé de la pièce de produit (PDP_{DF}) récupérée sur des gabarits d'assemblage (AF) du système de gabarit sémantique modulaire au niveau d'un espace de travail d'assemblage (AWS) pour des pièces de produit à assembler et la localisation des gabarits (DF, AF) de manière optique au cours d'une opération d'assemblage (AOP),
dans lequel l'étape a) est réalisée par la même machine automatisée (AMA) ;
b) une unité de commande de machine automatisée (AMACU) connectée à l'au moins une machine automatisée (AMA) formant ainsi un sous-système technique fonctionnel (SSY) et conçue de telle sorte que
b1) un module de « génération de mouvement de machine automatisée » (AMAMG-M) calcule (cpt) en générant un mouvement de machine automatisée exempt de collisions ou une planification de trajet de machine automatisée
b11) des séquences de mouvement de machine cinématiques primaires (MAMSₖ₁) pour permettre la récupération de machine automatisée et le placement de machine automatisé de l'au moins une machine automatisée (AMA) au cours de l'opération de distribution (DOP) et
b12) des séquences de mouvement de machine cinématiques secondaires (MAMSₖ₂) pour permettre la récupération de machine automatisée et le placement de machine automatisé de l'au moins une machine automatisée (AMA) au cours de l'opération d'assemblage (AOP), qui sont fournies (prv) à un module « d'exécution de mouvement de machine automatisée » (AMAME-M) exécutant (exe) les séquences calculées (MAMSₖ₁, MAMSₖ₂) sur l'au moins une machine automatisée (AMA),
b2) une architecture de machine automatisée hybride au moins réactive et délibérative (AMAAT) est fournie pour permettre ou garantir, sur la base
- d'un module de « modèle d'environnement de machines automatisées » (AMAWM-M) en tant que jumeau numérique pour formuler des ensembles comportementaux de machine automatisée corrects qui sont utilisés pendant un temps de fonctionnement de machine automatisée,
- d'un modèle tridimensionnel d'un environnement d'assemblage (AEV) au sein duquel et une information (INF), de préférence une information géométrique, du produit (PD) et des pièces de produit (PDP, PDP_{DA}, PDP_{DF}) avec lesquelles l'opération de distribution (DOP) et l'opération d'assemblage (AOP) sont exécutées, et
- d'un module de « flux de travail de machine automatisée » (AMAWF-M) d'une pièce de travail de machine automatisée pour réaliser l'opération de distribution (DOP) et l'opération d'assemblage (AOP) est passée en série de stades de machine automatisée du début à la fin,
l'exécution des séquences de mouvement de machine cinématiques primaires (MAMSₖ₁) et des séquences de mouvement de machine cinématiques secondaires (MAMSₖ₂) via le module de « génération de mouvement de machine automatisée » (AMAMG-M) et le module de « génération de mouvement de machine automatisée » (AMAMG-M) en
b21) initialisant (ilz) le « modèle d'environnement de machines automatisées » selon une information de configuration (CINF) configurant la machine automatisée (AMA) et l'environnement d'assemblage (AEV) et
b22) instanciant (itt) le « flux de travail de machine » et en mettant à jour (upd) le « modèle d'environnement de machines automatisées » avec l'information (INF) du produit (PD) et les pièces de produit (PDP, PDP_{DA}, PDP_{DF}),
dans lequel l'étape b) est réalisée par l'unité de commande de machine automatisée connectée à la machine automatisée ;
dans lequel le produit (PD) qui est assemblé selon l'opération d'assemblage (AOP) est placé par la même machine automatisée dans ou sur un gabarit de produit (PF) du système de gabarit sémantique modulaire au niveau de la zone de transfert (HOA) et le produit (PD) placé dans ou sur le gabarit de produit (PF) est transféré vers une zone de sortie (OPA).

6. Système d'assemblage (ASY) selon la revendication 5, **caractérisé en ce que** les gabarits de distribution (DF) et les gabarits d'assemblage (AF) sont marqués par des marqueurs lisibles par machine automatisée (MAR) localisant précisément les gabarits (DF, AF) dans la zone de transfert (HOA) respectivement l'espace de travail d'assemblage (AWS), qui incluent de préférence des identifiants (ID) identifiant les gabarits (DF, AF).

7. Système d'assemblage (ASY) selon la revendication 6, **caractérisé en ce que** l'au moins une machine automatisée (AMA) inclut une caméra (CAM) pour lire les marqueurs (MAR).

8. Système d'assemblage (ASY) selon la revendication 6, **caractérisé en ce que** les identifiants (ID) incluent une information spécifiant ou codant une logistique de distribution et d'assemblage ainsi que des instructions d'assemblage.

9. Système d'assemblage (ASY) selon l'une des revendications 5 à 8, **caractérisé en ce que** la machine automatisée (AMA) est un robot, un portique ou un robot delta exécutant l'opération de distribution (DOP) et l'opération d'assemblage (AOP).
